# EUROPEAN PATENT SPECIFICATION

(11) **EP 3 930 894 B1**
(45) Date of publication and mention of the grant of the patent: **02.12.2026**
(21) Application number: 20763147.4
(22) Date of filing: 28.02.2020
(51) Int. Cl.: B01J 37/34, B01J 19/08, B01J 19/12, B01J 19/10, C01C 1/04

(54) **DYNAMIC RESONANCE OF HETEROGENEOUS CATALYSIS**
DYNAMISCHE RESONANZ DER HETEROGENEN KATALYSE
RÉSONANCE DYNAMIQUE DE CATALYSE HÉTÉROGÈNE

(30) Priority: 28.02.2019 US 201962812146 P
(43) Date of publication of application: 05.01.2022
(73) Proprietor: Regents of the University of Minnesota, Minneapolis, Minnesota 55455-2020 (US)
(72) Inventor: DAUENHAUER, Paul J., Shoreview, Minnesota 55126-6008 (US); ARDAHG, Matthew Alexander, Minneapolis, Minnesota 55455 (US); FRISBIE, Carl Daniel, Saint Paul, Minnesota 55102 (US)
(74) Representative: Fish & Richardson P.C.
(86) International application number: PCT/US2020/020282
(87) International publication number: WO 2020/176826

(56) References cited:
- US-A1- 2007 140 930
- US-A1- 2015 196 888
- KAKEKHANI ARVIN ET AL: "Ferroelectrics: A pathway to switchable surface chemistry and catalysis", SURFACE SCIENCE, NORTH-HOLLAND, AMSTERDAM, NL, vol. 650, 6 November 2015 (2015-11-06), pages 302 - 316, XP029540442, ISSN: 0039-6028, DOI: 10.1016/J.SUSC.2015.10.055
- COBDEN P.D, NIEUWENHUYS B.E, ESCH F, BARALDI A, COMELLI G, LIZZIT S, KISKINOVA M: "A fast X-ray photoelectron spectroscopy study of the NO -H2 reaction over Rh (533): understanding hysteresis and oscillations in the reaction rate", SURFACE SCIENCE, vol. 416, no. 1-2, 1998, pages 264 - 273, XP055736592, DOI: 10.1016/S0039-6028(98)00600-1
- WANG LEI, ZENG ZHENHUA, GAO WENPEI, MAXSON TRISTAN, RACITI DAVID, GIROUX MICHAEL, PAN XIAOQING, WANG CHAO, GREELEY JEFFREY: "Tunable intrinsic strain in two-dimensional transition metal electrocatalysts", SCIENCE, vol. 363, no. 6429, 22 February 2019 (2019-02-22), pages 870 - 874, XP055736596, Retrieved from the Internet <URL:https://science.sciencemag.org/content/363/6429/870> [retrieved on 20200604], DOI: 10.1126/science.aat8051
- WU ET AL.: "Electron density modulation of NiCo2S4 nanowires by nitrogen incorporation for highly efficient hydrogen evolution catalysis", NATURE COMMUNICATIONS, vol. 9, no. 1425, 12 April 2018 (2018-04-12), XP055736600, Retrieved from the Internet <URL:https://www.nature.com/articles/s41467-018-03858-w> [retrieved on 20200604], DOI: 10.1038/s41467-018-03858-w
- NEWTON MARK A.: "Time Resolved Operando X-ray Techniques in Catalysis, a Case Study: CO -Oxidation by O2 over Pt Surfaces and Alumina Supported Pt Catalysts", CATALYSTS, vol. 7, no. 58, 14 February 2017 (2017-02-14), XP055736608, Retrieved from the Internet <URL:https://www.mdpi.com/2073-4344/7/2/58/htm> [retrieved on 20200605]
- BAHRUJI HASLIZA; BOWKER MICHAEL; HUTCHINGS GRAHAM; DIMITRATOS NIKOLAOS; WELLS PETER; GIBSON EMMA; JONES WILM; BROOKES CATHERINE; M: "Pd/ZnO catalysts for direct CO2 hydrogenation to methanol", JOURNAL OF CATALYSIS, vol. 343, 1 April 2016 (2016-04-01), pages 133 - 146, XP029772605, Retrieved from the Internet <URL:https://www.sciencedirect.com/science/article/pii/S0021951716001135> [retrieved on 20200605], DOI: 10.1016/j.jcat.2016.03.017
- ARDAGH ET AL.: "Principles of Dynamic Heterogeneous Catalysis: Surface Resonance and Turnover Frequency Response", vol. 9, no. 8, 1 March 2019 (2019-03-01), pages 6929 - 6937, XP055736616, Retrieved from the Internet <URL:https://chemrxiv.org/articles/Principles_of_Dynamic_Heterogeneous_Catalysis_Surface_Resonance_and_Turnover_Frequency_Response/7790009/1?file=14499062> [retrieved on 20200604], DOI: 10.1021/acscatal.9b01606

## Description

### CROSS-REFERENCE TO RELATED APPLICATION

This application claims the benefit of U.S. Patent Application No. 62/812,146 filed on February 28, 2019.

### STATEMENT OF GOVERNMENT INTEREST

This invention was made with government support under DE-SC0001004 awarded by the U.S. Department of Energy - Energy Frontier Research Center. The government has certain rights in the invention.

### TECHNICAL FIELD

This invention relates to systems and methods for increasing chemical reaction rates by varying the binding energy of substrates to these surfaces at resonant frequencies.

### BACKGROUND

Catalytic rate enhancement occurs primarily through catalyst design to tune the binding characteristics of surface species and transition states for maximum catalytic turnover frequency. In the past two decades, advances in nanostructured materials have led to detailed synthesis of atomic-scale active sites that precisely balance the surface substrate binding energies. The limit of this approach is characterized by the Sabatier principle, which states that the binding of substrates must be neither too strong nor too weak. Quantitative description of the Sabatier principle was captured in Balandin-Sabatier volcano-shaped curves, which depicted a metric of catalyst activity relative to a descriptor of substrate binding.

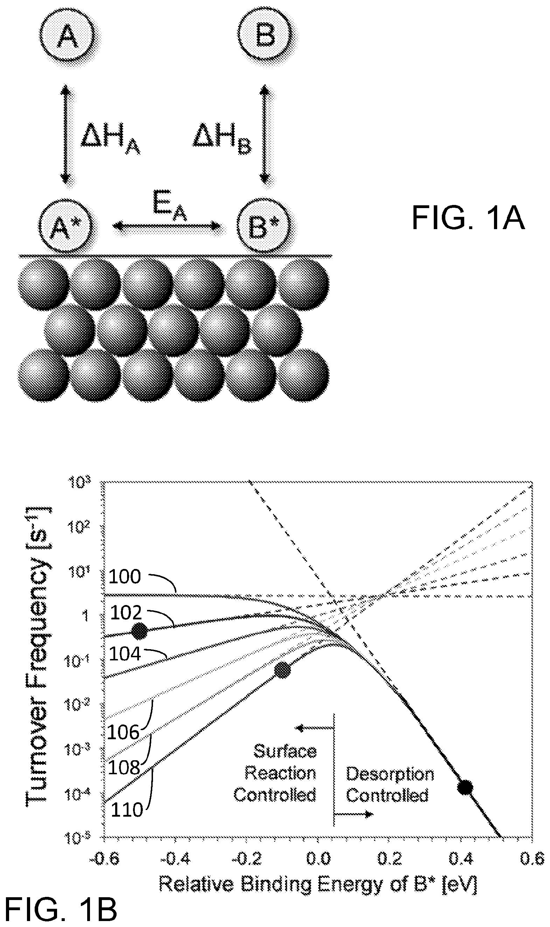

The simplest surface catalytic mechanism of species A reacting to species B depicted in FIG. 1A obeys the Sabatier principle with regard to adsorption enthalpy (ΔH_{A}, ΔH_{B}) and surface reaction activation energy, (Eₐ). Reactant molecule A adsorbs to the surface as A*, undergoes surface reaction to B*, and then desorbs to gas-phase product B; the overall turnover rate can potentially be limited by any one of these three steps. Reactant adsorption is a fast, barrierless step unless it is combined with surface reactions; a combined step of dissociative adsorption (e.g., H₂, N₂) is commonly rate limiting on some catalytic materials. The turnover frequency therefore results from the sequential kinetics of surface reaction(s) and product desorption. As presented originally by Balandin, the transition between surface reaction- and desorption-control exhibits the characteristic 'volcano' two-kinetic-regime plot. Surface adsorbates desorb slowly on strong-binding materials, while surface reactions occur slowly on weak-binding materials; the kinetic balance of these two steps forms the optimum turnover frequency of the system (i.e., volcano peak) characteristic to materials only exhibiting the optimal binding energy.

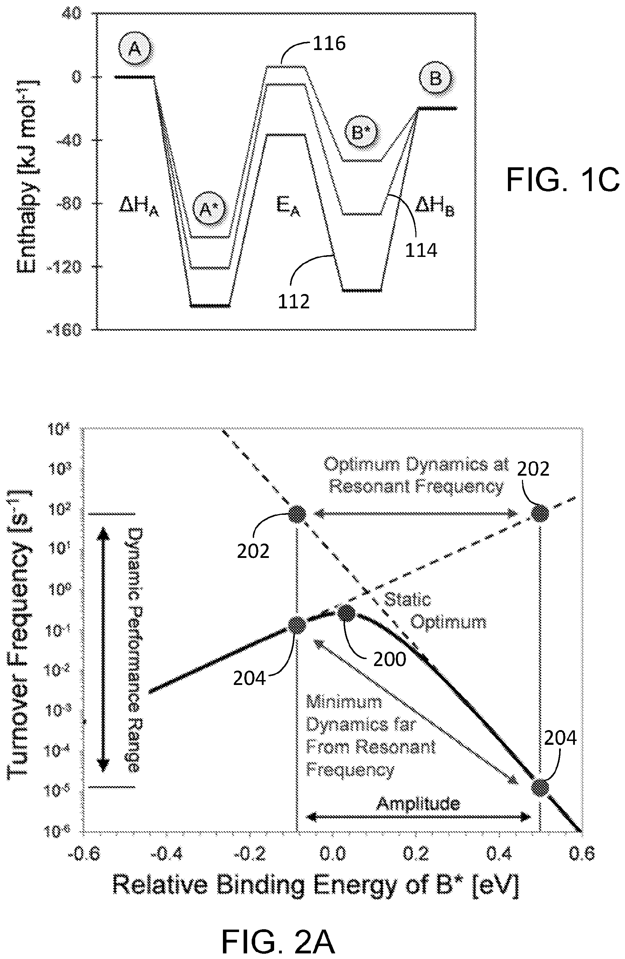

The asymmetry of some Balandin-Sabatier curves depicted in FIG. 1B arise from the relationship between the surface binding energy and the surface reaction activation energy. As described in the Bell-Evans-Polyani (BEP) principle, the activation energy of a catalytic reaction linearly correlates with the surface reaction enthalpy by a linear-scaling parameter, α, and offset of *E₀* associated with a reaction class. As depicted in FIG. 1B, *α* ~ 0 (plot 100) indicates negligible relationship between the enthalpy of surface reaction and the surface activation energy resulting in a 'flat' volcano, while a completely proportional relationship, *α* ~ 1.0 (plot 110), can form a more symmetric Balandin-Sabatier curve. Values between 0 and 1 form the interspersed curves: *α* ~ 0.8 (plot 102), *α* ~ 0.6 (plot 104), *α* ~ 0.4 (plot 106), and *α* ~ 0.2 (plot 108)all with offset, *E₀* (102 kJ/mole). The Balandin-Sabatier volcano curves in FIG. 1B are also defined by the condition that the surface energy of B* changes at twice the rate of the surface energy of A*, a ratio that can vary between surface chemistries and materials. FIG. 1C shows three conditions of surface intermediate binding energy: +0.4 eV (plot 112); -0.1 eV, α = 1.0 (plot 114); -0.5 eV, α = 0.2 (plot 116).

In accordance with the Sabatier principle, the characteristics of a single binding site are balanced between at least two transient phenomena, leading to maximum possible catalytic activity at a single, static condition (i.e., a 'volcano' peak). Catalyst activity optimization within the context of Balandin-Sabatier curves has focused on catalyst design to achieve optimal turnover at the volcano curve apex. Of the existing catalysts and multi-metal combinations, computational screening of the relevant surface-binding descriptors has aimed to identify single- or multi-descriptor optima from databases of catalytic materials. Other strategies have aimed to create and tune the properties of new materials including physical and electronic descriptors such as metal spacing and coordination, d-band center and fermi level, electronic interaction with supports, solvents, and co-adsorbents via multi-metal mixing, and nanostructured synthesis. All of these approaches have achieved success in creating new materials near the maximum theoretical turnover frequency of a static catalyst. However, some limitations of the Balandin-Sabatier maximum arises at least in part from the multi-purpose catalyst, which must balance the kinetics of competing reaction steps (activation, desorption, etc.). US 2007/140930 A1 describes a gate-biased enhancement of catalyst performance. US 2015/196888 A1 describes a device that includes a substrate, an electrically insulating layer disposed on the substrate, a layer of material disposed on the electrically insulating layer, and a catalyst disposed on the layer of material. Kakekhani Arvin et al describe in Surface Science, vol. 650, 6 November 2015, on pages 302-316 that ferroelectrics is a pathway to switchable surface chemistry and catalysis.

### SUMMARY

The present invention is defined by the independent claims. The dependent claims depict additional embodiments of the invention. In a first general aspect, a system configured to catalyze the conversion of a first chemical species to a second chemical species includes a back gate device having a dielectric material, a back gate material, and a catalyst, wherein the back gate device is configured to apply a back gate voltage to the catalyst. The back gate voltage is a waveform.

Implementations of the fourth general aspect may include one or more of the following features.

The system may include a dielectric support in direct contact with the catalyst. The catalyst may be in the form of a metal layer, a single metal atom, or a metal cluster comprising two or more atoms. The catalyst may have a thickness of less than 10 nm or less than 100 nm. In some cases, the back gate voltage is a square wave, a sinusoidal wave, a sawtooth wave, or a triangular wave. A frequency of the waveform is typically in a range of 0.1 Hz to 10⁷ Hz or 100 Hz to 10,000 Hz. The dielectric material may spontaneously polarize in the presence of an electric field and typically includes a paraelectric material or a ferroelectric material. The ferroelectric material may include one or more of barium titanate (BaTiO₃), potassium niobate (KnbO₃), lead titanate (PbTiO₃), lithium tantalate, strontium titanate (SrTiO₃), and doped materials such as BaZrO₃/BaTiO₃). The paraelectric material may include one or more of silicon dioxide (SiO₂), aluminum oxide (Al₂O₃), and tantalum pentoxide (Ta₂O₅).

As described herein, a dynamic heterogeneous catalyst oscillating between two electronic states can demonstrate catalytic activity as great as 3-4 orders of magnitude (1,000-10,000x) above the Sabatier maximum. Surface substrate binding energies can be varied (0.1 < U < 3.0 eV) over a broad range of frequencies (10⁻⁴ *<f<* 10¹¹ s⁻¹) in square, sinusoidal, sawtooth, and triangular waveforms to characterize the impact of surface dynamics on average catalytic turnover frequency. Catalytic systems are shown to exhibit order-of-magnitude dynamic rate enhancement at 'surface resonance' defined as the band of frequencies (e.g., 0.1 to 10¹¹ Hz or 10³-10⁷ Hz) where the applied surface waveform kinetics were comparable to kinetics of individual microkinetic chemical reaction steps. Key dynamic performance parameters are described regarding industrial catalytic chemistries and implementation in physical dynamic systems operating above kilohertz frequencies.

In a second general aspect, a method for catalyzing the conversion of a first chemical species to a second chemical species includes applying a back gate voltage to a catalytic stack comprising a dielectric material, a back gate material, and a catalyst. The back gate voltage is a waveform.

The details of one or more embodiments of the subject matter of this disclosure are set forth in the accompanying drawings and the description. Other features, aspects, and advantages of the subject matter will become apparent from the description, the drawings, and the claims.

### BRIEF DESCRIPTION OF THE DRAWINGS

FIG. 1A depicts a surface reaction of A converting to B via transition state with forward activation energy, E_{A}. FIG. 1B shows Balandin volcano plots for the turnover frequency of A-to-B with variable binding energy of A* and B* and variable Bell-Evans-Polyani relationships of Eₐ to ΔH (0 ≤ α ≤ 1.0. FIG. 1C shows three conditions of surface intermediate binding energy.

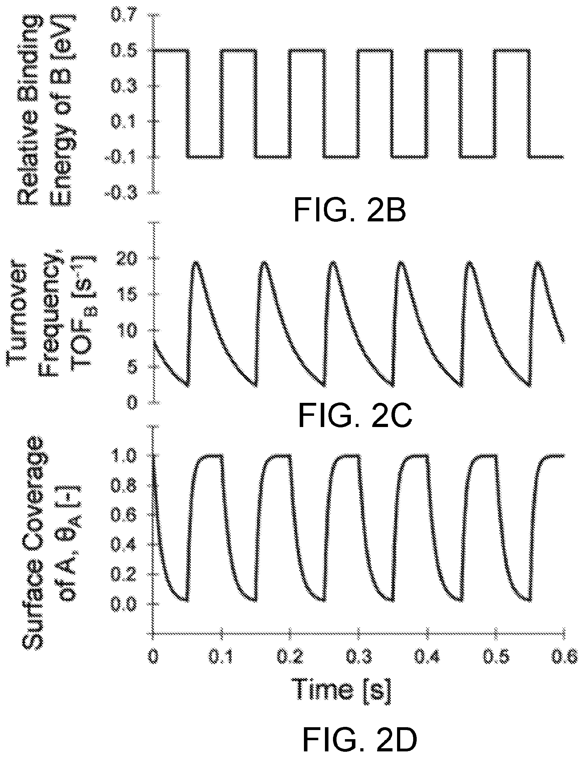

FIG. 2A shows transient variation of the catalyst surface (α = 0.8) binding between a maximum and minimum binding energy, which includes the overall surface amplitude resulting in dynamic performance with optimum turnover frequency at the reaction resonance frequency. The catalyst binding energy changes as a square wave below the resonant frequency (*f* = 10 Hz), resulting in maximum and minimum surface coverage of surface intermediate B* and A*. Loading and unloading of B from the surface produces transient B production rates. FIGS. 2B- 2D depict relative binding energy, turnover frequency, and surface coverage, respectively.

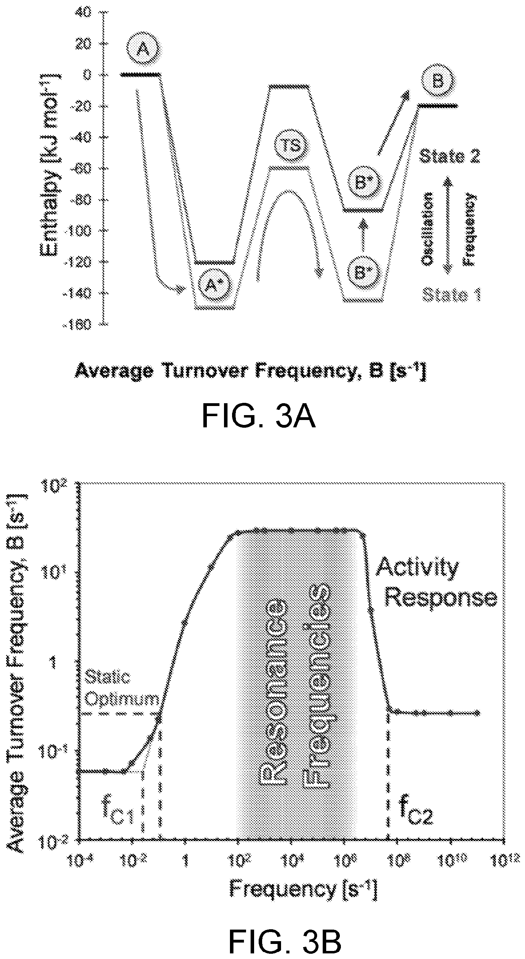

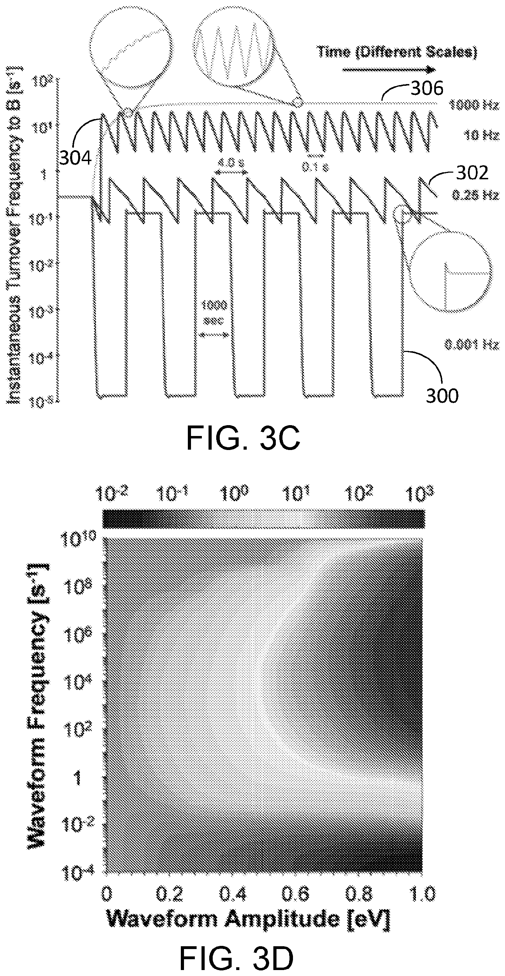

FIGS. 3A-3D show the activity response of applied oscillating surface binding energy (square waveform). FIG. 3A shows an oscillating state energy diagram for A reacting on a catalytic surface to B product (-0.1 to 0.5 eV of B*). FIG 3B shows average catalytic turnover frequency to product B at ΔA of 0.6 eV at 150 °C and 100 bar. FIG. 3C shows instantaneous turnover frequency to B for four frequencies at ΔU of 0.6 eV at 150 °C and 100 bar. FIG. 3D shows average turnover frequency to B at 150 °C and 100 bar for variable square waveform amplitude and frequency.

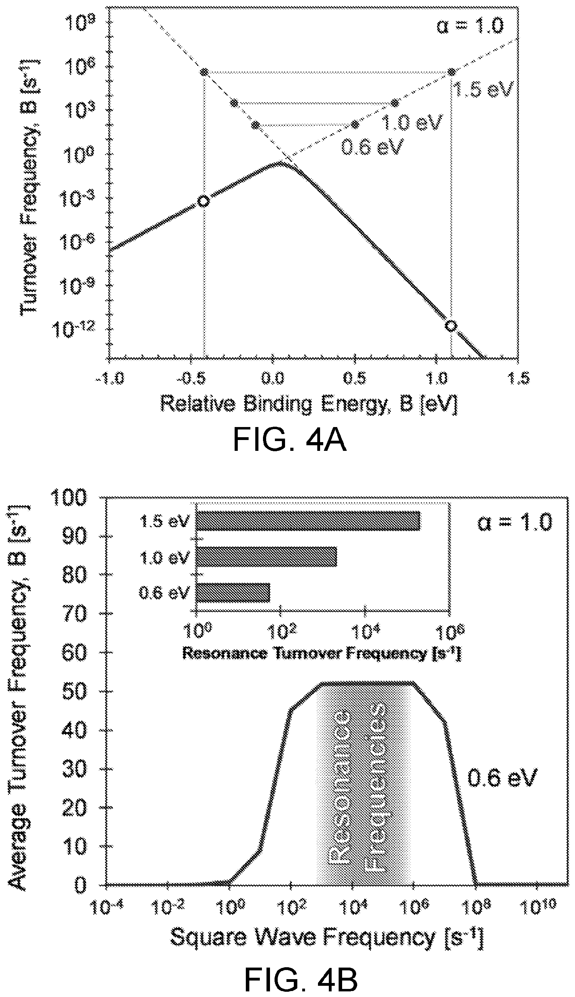

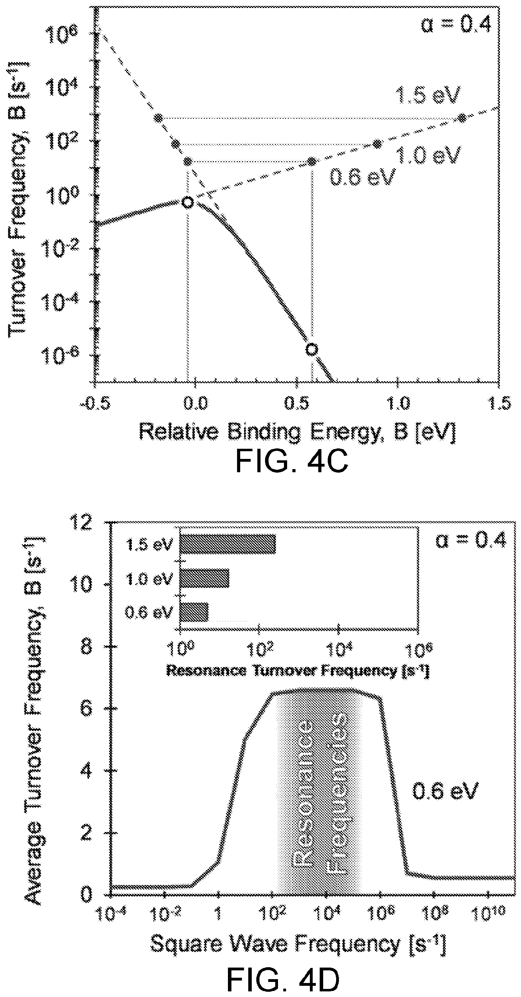

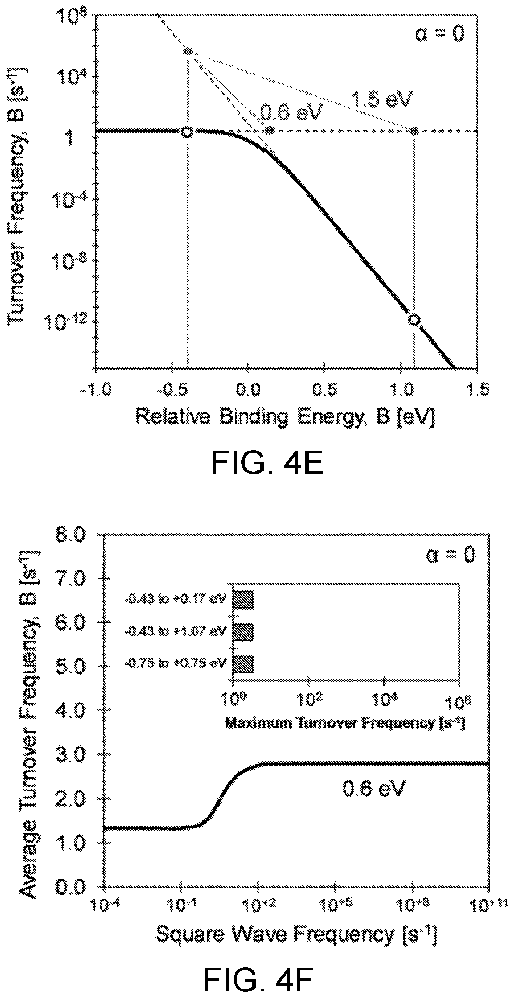

FIGS. 4A-4F show dynamic catalytic response of three linear-scaling relationships (all panels comprised of an A-to-B reaction at 150 °C, 100 bar, perfectly mixed system operating at 1% yield of B product with BEP relationship parameter α as the sole variable). FIG. 4A is a volcano plot for α = 1.0 system. FIG. 4B shows catalytic turnover frequency response of α = 1.0 system. FIG. 4C is a volcano plot for the α = 0.4 system. FIG. 4D shows catalytic turnover frequency response of the α = 0.4 system. FIG. 4E is a volcano plot for the α = 0.0 system. FIG. 4F shows catalytic turnover frequency response of the α = 0.0 system.

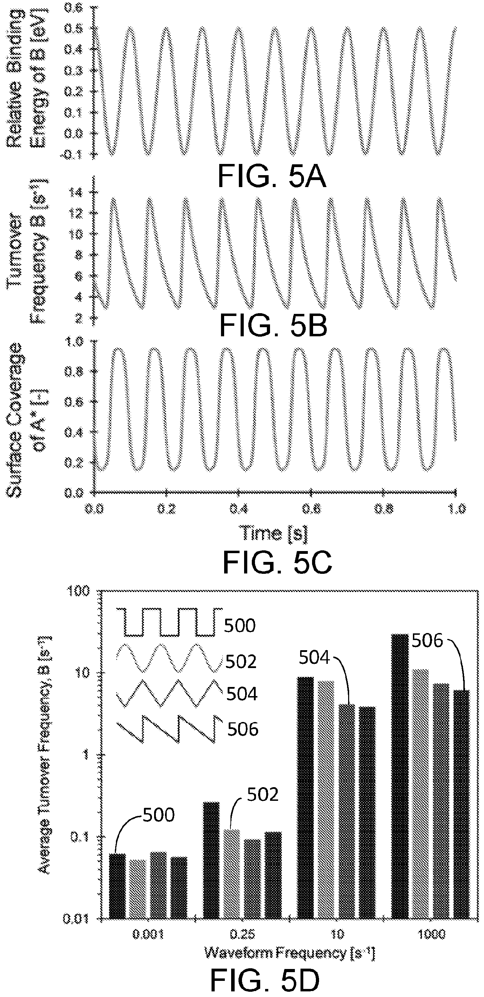

FIGS. 5A-5D show results for surface B* binding energy wave form (Balandin-Sabatier volcano curves comprised of ΔU ~ 0.6 eV, 150 °C, perfectly mixed reactor at 1% yield of B product). FIG. 5A shows relative binding energy of B* varying in sinusoidal waveform at *f*~10 Hz. FIG. 5B shows turnover frequency to B response to a 10 Hz sinusoidal waveform. FIG. 5C shows surface coverage of A* response to a 10 Hz sinusoidal waveform. FIG. 5D shows comparison of average turnover frequency to B for an applied B* surface binding energy oscillation of four waveform types.

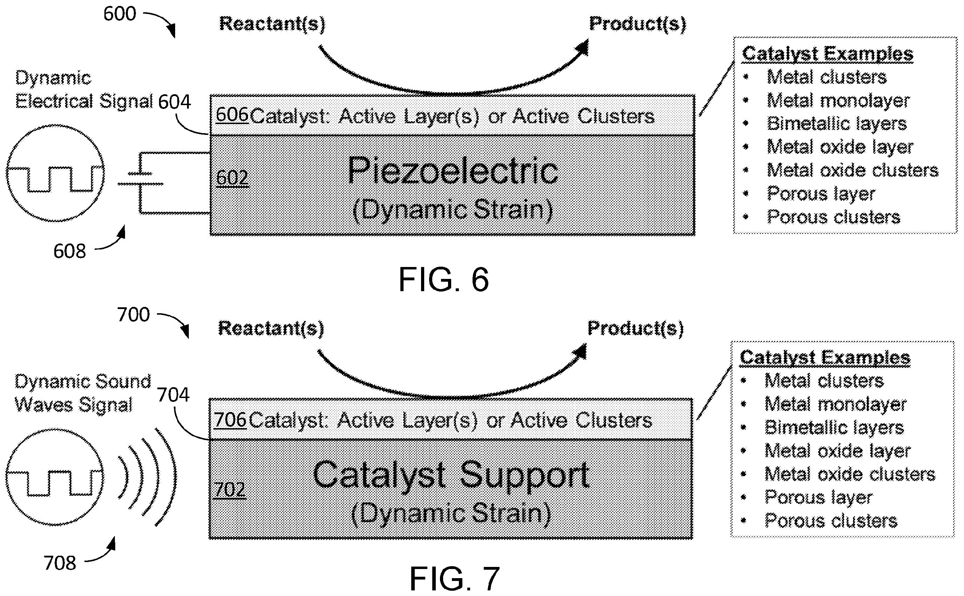

FIG. 6 depicts a dynamic catalysis system with a piezoelectric support.
FIG. 7 depicts a dynamic catalysis system with a dynamic sound wave source that transfers variable strain to the catalyst.

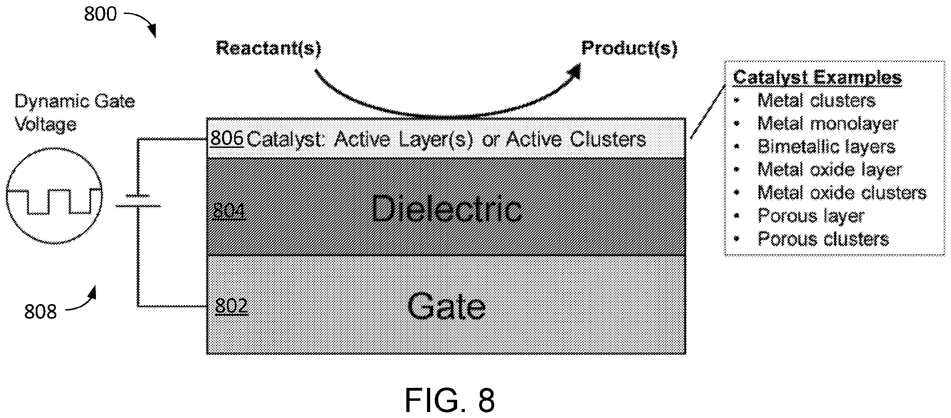

FIG. 8 depicts dynamic catalysis system having a catalyst layer or catalyst clusters on a dielectric material in contact with a gate material exposed to a dynamic gate voltage.

### DETAILED DESCRIPTION

Systems and method for temporally decoupling surface reaction steps via oscillation of the catalytic surface binding energy are described. Heterogeneous catalysts including metals, metal oxides, and microporous materials such as zeolites or metal-organic frameworks (MOFs) can be enhanced in overall activity when operated under dynamic oscillatory conditions. By varying the binding energy of substrates in general to these surfaces at frequencies in the resonance frequency range (from 10³-10⁷ Hz) at moderate amplitudes (0.3-1.5 eV), reaction rates can be increased from 10x to over a million times faster than conventional catalysts at static conditions. The waveform of oscillation can take various forms, including square, sinusoidal, sawtooth, and triangular, with an amplitude of binding energy oscillation typically in a range of 0.3 to 1.5 eV

As shown in FIG. 2A, the Balandin-Sabatier volcano curve can be depicted with its independent slopes extended above the apex point 200 (dashed lines); these represent the potential rates of surface reaction and desorption absent other limitations. In a dynamic system, the surface energy oscillates between two or more binding energy states, with the oscillation amplitude identified as the total distance in traversed binding energy (U [=] eV) at the frequency of oscillation (*f*[=] s⁻¹). As used herein, "dynamic catalysis" generally refers to a catalytic process in which the surface energy of the surface on which catalysis occurs is made to oscillate or vary between two or more binding energy states (e.g., binding energy states of the substrate and the product), where the oscillation amplitude is the total distance in traversed binding energy (U [=] eV) at the frequency of oscillation. In FIG. 2A, the volcano plot has a BEP of moderate slope, α ~ 0.8, and amplitude of (-0.10 to +0.50 eV, ΔU = 0.60 eV). The optimal turnover frequencies are depicted for each state at the given amplitude as points 202, while the minimum turnover frequencies below the static optimum are identified as points 204.

The response of the substrate on the catalyst surface depends on the relative dynamics of the system to the kinetics of the surface steps (i.e., reactions, desorption). For a catalyst oscillating between two states as a square waveform with amplitude of ΔU and frequency (*f ~* τ⁻¹), the optimum time-averaged turnover frequency will occur when the time scale of each state is approximately the same as the time scale of the individual surface steps. Referred to here as "surface resonance," the resonant frequencies depicted in FIG. 2B permit the surface coverage of B* to vary (θₘᵢₙ < θ_{B} < θₘₐₓ) without stabilization before switching surface states.

Dynamic catalysis can be explored for a broad range of catalyst and dynamic applied conditions to understand the connection between catalyst-system design combinations and catalytic turnover frequency. For BEP relations identified in FIG. 1B (0 ≤ α ≤ 1.0), the averaged turnover frequency for a broad range of conditions including applied frequency (f), surface energy amplitude (ΔU), and wave shape (e.g., square versus sinusoidal) is presented. Optimal performance is then identified within the constraints of practical implementation.

Continuously stirred tank reactor (CSTR - perfect mixing assumed) models were implemented in Matlab 2017b and Matlab 2018b. The shell code set reactor parameters included the inlet volumetric flow rate (q), catalyst weight (w), and active site loading. Reactor time-on-stream data was generated using the Matlab ODE15s differential equation solver. This solver was selected based on its performance. The set of differential equations consisted of forward and reverse rates for the consumption of gas phase (A, B) and surface species (*, A*, B*). This general reaction system, A ↔ B, was modeled using three reversible elementary steps: (i) adsorption of A, (ii) conversion of A* to B*, and (iii) desorption of B. $A ⇌ A *$ (1) $A * ⇌ B *$ (2) $B * ⇌ B$ (3) Generalized forms of the differential equation used for each gas phase and surface species are: $\frac{d \left[A\right]}{dt} = \frac{q}{V} \left({\left[A\right]}_{feed}-\left[A\right]\right) - {r}_{ads} + {r}_{des}$ (4) $\frac{d {\left[A\right]}^{∗}}{dt} = {r}_{ads} - {r}_{des} + {r}_{surf rxn forward} - {r}_{surf rxn reverse}$ (5) Reaction rate equations consisted of rate constants, and each elementary step was assumed to be first order in all participating reactants. Since this was modeled as a gas phase reaction, adsorption steps were expressed in terms of A and B pressures (bar). ${r}_{ads} = {k}_{ads} {P}_{A} \left[∗\right]$ (6) ${r}_{des} = {k}_{des} \left[A\right] *$ (7) ${r}_{surf rxn forward} = {k}_{surf fxn forward} \left[A\right] *$ (8) Rate constants were constructed as Arrhenius expressions using pre-exponential factors and activation energies for adsorption, desorption, and surface reactions. Pre-exponential factors were set to 10⁶ (bar-s)⁻¹ for adsorption steps and 10¹³ s⁻¹ for surface reaction and desorption steps. Activation energy was set to 0 kcal/mol for adsorption and to the binding energies (BEs) of A and B for their respective desorption steps. The binding energies for A and B, the surface reaction activation energy (Eₐ), and the surface reaction enthalpy of reaction were selected; the base conditions were BE_{A} = 30 kcal mol⁻¹, BE_{B} = 23 kcal mol⁻¹, Eₐ = 24 kcal mol⁻¹, and ΔH = 0 kcal/mol.

Brønsted-Evans-Polyani relationships between Eₐ and BEs were held at a constant offset of 24 kcal/mol and the slope of the relationship, α, was varied (0 ≤ α ≤ 1.0). Thus, the activation energy was expressed as a linear function of the surface enthalpy of reaction, ΔHs (i.e., the difference in binding energies between A* and B*): ${E}_{a} = α * {ΔH}_{S} + {E}_{0}$ (9) Balandin volcano plots were generated by varying ΔHs and measuring the time-averaged turnover frequency (TOF) at 1.0% overall yield of B. Turnover frequency was defined as $TOF = \left[B\right] \frac{q}{# of sites}$ for the CSTR design equation, so in practice *q* was adjusted until the outlet yield of component B was 1.0 %. Variation in the BEP slope (0 ≤ *α* ≤ 1.0) resulted in surface reaction activation energies (15 < Eₐ < 34 kcal/mol) between binding energies of 0.5 and 2.0 eV.

Dynamic catalysis was simulated by running ODE15s for a system in which BEs varied with time on stream as either square, sinusoidal, sawtooth, or triangular waves. The shift of the binding energy of B was specified in the shell code and affected the binding energies of A and B as well as the activation energy of the surface reaction. Oscillation period/frequency was set by specifying the time duration spent at each condition. Reported TOFs were calculated when the system oscillation was centered on 1.0 % yield and after the reactor had achieved oscillatory steady state, defined as a steady time-averaged turnover frequency.

Plots of the average turnover frequency as a function of surface binding energy oscillation amplitude and frequency (i.e., heat maps) were generated in Matlab 2018b using the jet color scheme to indicate low and high TOF. The shape of the data was assessed using polynomial fits of varying order. 3^{rd} order polynomials were found to fit the data and heat map data consists of interpolated data from a modified akima cubic hermite fit through discrete data points at 0-1.0 eV ΔBE. This data was obtained for symmetric dynamic catalysis starting at the volcano peak (ΔBE = -0.05 to 0.05 eV) and oscillating the same amplitude in each direction (from 0-0.75 eV). Data were also obtained for asymmetric dynamic catalysis where the endpoints were chosen based on extrapolated linear fits of each side of the volcano curve. These lines were set equal with a specified oscillation amplitude between 0-1.5 eV, and the endpoints were chosen by drawing a vertical line down to the volcano plot. Frequency response figures were generated for scenarios with varying BEP relationships where the BEP slope ranged from zero to one.

The impact of oscillating the surface binding energy of B* with time is depicted in FIGS. 2B-2D for a square waveform of amplitude ΔU ~ 0.6 eV and frequency of *f*~ 10 Hz. The square waveform of surface binding energies of B* depicted in FIG. 2B was simulated for a perfectly mixed reactor operating at 1% conversion of input A and 150 °C. These conditions produce the instantaneous turnover frequency depicted in FIG. 2C which ranges from 3-19 s⁻¹ in a complex oscillating form. The TOF_{B} achieves a maximum of 19 s⁻¹ soon after the binding energy of B* switches to relatively low energy (BE_{B} ~ -0.1 eV), while the minimum TOF_{B} of 3 s⁻¹ occurs just before the BE_{B} switches from 0.5 to -0.1 eV. These turnover frequencies of B are below the predicted resonance frequencies identified by points 202 in FIG. 2A (~100 s⁻¹). An explanation for the lower-than-expected TOF_{B} is provided by the surface coverages of FIG. 2C. At 10 Hz, the surface coverage of A* achieves complete oscillation between θ_{A} ~ 0 and θ_{A} ~ 1; moreover, the surface coverage of A* stabilizes for a significant fraction of the period of oscillation, indicating a period (~ 0.02 s) with negligible change in the surface composition of the catalyst. Thus, faster oscillation above 10 Hz of the surface binding energy of B* may utilize the catalyst more efficiently.

The TOF_{B} of FIG. 2C indicate that the highest rates occur when surface states flip from high to low binding energy of B*. The energetic path leading to this unloading of the surface of B* is depicted in FIG. 3A. In the initial strong binding state 1, A adsorbs to the surface as A* and forms a thermodynamic distribution with state B*; product B forms slowly comparable to the TOF associated with the static conditions of state 1. When the surface flips to weaker-binding state 2, B* readily desorbs with lower activation energy to form product B. By these two states, the complete cycle can be interpreted as filling of the surface sites (state 1) followed by forced desorption (state 2), the overall rate of which is determined by the surface frequency and amplitude associated with the surface binding energies of the two states.

The impact of the surface state-flipping frequency on the time-averaged turnover frequency is depicted in FIG. 3B for fixed square waveform amplitude (ΔU = 0.6 eV). At low frequencies (10⁻⁴ < *f* < 10⁻² Hz), the average TOF_{B} is an average of the static conditions of the two states (i.e., a slow catalyst). At the corner frequency (*f*_{C1}) of ~0.02 Hz, the average turnover frequency begins to increase until the dynamic system eventually matches optimal turnover frequency of the static system at the Balandin-Sabatier volcano apex. Further increasing the surface waveform frequency increases the average turnover frequency until maximizing over a range of dynamic resonance (~10³ < *f* < ~10⁷), identified in FIG. 3B (shaded region). Above the resonance frequency band, the average turnover frequency decreases before stabilizing at 10⁻³ s⁻¹ at a waveform frequency of ~10¹¹ Hz, the TOF_{B} associated with optimal conditions of the static system at the volcano curve optimum.

For the volcano curve system depicted in FIG. 2B with amplitude of 0.6 eV square waveform, the instantaneous TOF_{B} is depicted in FIG. 3C for four frequencies: 0.001 Hz (plot 300), 0.25 Hz (plot 302), 10 Hz (plot 304), and 1000 Hz (plot 306). At low frequency (0.001 Hz), the surface coverages of A* and B* rapidly respond to the change in surface state, with static operation occurring in either of the two states. Low frequency below *f*_{C1} results in TOF_{B} response comparable to a mix of the two low activity states (points 204 in FIG. 2A). The unique behavior to the general TOF_{B} response exists only at the condition of flipping surface states from strong to weak binding of B*. As noted in the insets of FIG. 3C for 0.001 Hz, the TOF_{B} overshoots resulting from the unloading of surface B* species into the gas phase as product B. As the waveform frequency increases to 0.25 and 10 Hz, the unloading of B* species from the surface becomes the dominant mechanism leading to catalyst activity. For these two frequencies, the TOF_{B} and the surface coverages of A* and B* are transient for most of the waveform period. At 1000 Hz in FIG. 3C, the TOF_{B} and surface coverages of A* and B* are always transient; under these conditions TOF_{B} and surface coverages only minimally oscillate in value (e.g., 0.29 < θ_{B} < 0.32).

An interpretation of catalytic surface resonance comes from evaluating the TOF_{B} response of each condition independently, as shown in FIG. 3C. The rate for occupying the surface species B* from gas reactant A is defined by the forward rate constant and surface coverage of A* (in equilibrium with A). Similarly, the rate of desorbing B* to gas product B is defined by the desorption rate constant and surface coverage of B*. The time scales of these two processes sum to the total time scale, which at resonance is comparable to the applied square waveform time scale. This concept is visually observed in FIG. 2A, where TOF_{B} for the two points 202 predict 60 s⁻¹ for each independent process, while the actual TOF_{B} predicted by simulation is exactly half of that value, 29 s⁻¹ (FIGS. 3B and 3C). Thus, catalytic surface resonance occurs when the frequency of the applied surface state-switching waveform is about the same as the natural frequency of the catalytic kinetics.

Variation of the surface square waveform amplitude changes the kinetics of the surface chemistry, resulting in a shift of the resonance frequency band. As depicted in the heat map of FIG. 4D, a range of amplitudes (0 < ΔU < 1.0 eV) was evaluated for the volcano curve of FIG. 2A for varying frequency over 15 orders of magnitude (10⁻⁴ ≤ *ƒ* ≤ 10¹¹ s⁻¹) to determine the *average* steady state turnover frequency to B, TOF_{B}. For each value of the oscillation amplitude ΔU, the two extreme values of U [eV] corresponding to the two states of the square surface waveform were selected to yield two conditions of equal rate. That is, each value of ΔU should produce a horizontal line connecting, e.g., two points 202 as in FIG. 2A. The variation in surface kinetics with square waveform frequency and amplitude is visually apparent in FIG. 4D, where low frequencies below 0.1 Hz are actually slower than static catalysis for amplitudes greater than 0.1 eV. Alternatively, above ~1 Hz, the average turnover frequency increases dramatically to 10 and 1000 s⁻¹ per catalytic site for amplitudes above 0.3 eV.

The ability to dynamically accelerate catalytic turnover depends at least in part on the energetics of the obtainable states defined by the shape of the Balandin-Sabatier volcano curve. Of the many parameters that define the volcano shape, the linear-scaling relationship parameter, α, relating the surface reaction enthalpy to the surface reaction enthalpy can dramatically shift the slope of the volcano plot. While FIGS. 2A-2D and 3A-3D describe a system with α of 0.8, three volcano plots of α of 1.0, 0.4, and 0.0 are shown in FIGS. 4A, 4C, and 4E, respectively. For steep volcano plots such as FIG. 4A, extension of the slopes as dashed lines above the volcano apex indicate rapid increase in the turnover frequency for amplitudes of 0.6, 1.0 and 1.5 eV at resonance conditions. This is supported by the catalytic reactor simulation kinetics of FIG. 4B, which considered the catalyst system of FIG. 4A at variable applied square waveform frequency (10⁻⁴ < *f* < 10¹¹). For a square waveform at an amplitude of 0.6 eV, the resonance frequencies of 10³ to 10⁷ s⁻¹ yield an average turnover frequency to B of about 52 s⁻¹ per catalytic site. At higher amplitudes of 1.0 and 1.5 eV, the average turnover frequency per catalytic site at resonance achieves 2,074 and 2.0•10⁵ s⁻¹.

A broader volcano of α of 0.4 in FIG. 4C limits the overall speed achievable for a given amplitude; the points above the curve are further apart and at lower turnover frequencies. This corresponds to lower overall reaction rates at resonance conditions as shown in FIG. 4D. At the extreme case where the activation energy of the surface reaction does not change with the binding energy of an adsorbate such as the volcano curve of FIG. 4E, the potential of dynamic operation is limited as shown in FIG. 4F. There exist at least two cases where the slope of the volcano curve is horizontal on one side as drawn: (1) catalytic systems where the surface reaction enthalpy does not change with the binding energies of the descriptor component (e.g., B*), thus leading to constant surface activation energy of reaction, and (2) systems with α of zero. In these cases, the rate of the surface reaction may not allow acceleration to match a fast rate of desorption, and the average overall turnover frequency may be limited to the rate of the surface reaction.

Applying dynamic operation to heterogeneous catalytic applications include identifying the conditions of optimal performance in addition to new design variables such as surface waveform shape that can be implemented in reactor technology. As depicted in FIG. 5A, the sinusoidal surface binding waveform varying from -0.1 to +0.5 eV at a frequency of 10 Hz applied to the catalyst system characterized by the volcano plot of FIG. 2A yields oscillatory turnover frequency (FIG. 5B) and surface coverage of A* (FIG. 5C) at 100 bar, 150 °C, and 1 % yield of B. Similar to the case with the square waveform 500, the turnover frequency of B increases when the applied waveform changes from strong binding of B* to weak binding. At the same time the surface coverage of A* increases to take the place of the B* that was removed from the surface as desorbed product B. Other considered waveform types including sinusoidal 502, triangle 504, and sawtooth 506 are depicted in FIG. 5D. For each frequency in the bar chart in FIG. 5D (0.001 Hz, 0.25 Hz, 10 Hz, and 1000 Hz), the bars from left to right correspond to waveforms 500 (square), 502 (sinusoidal), 504 (triangle), and 506 (sawtooth). For all conditions, the square waveform exhibits superior activity at surface resonance conditions. At higher frequencies of 10 and 1000 Hz, the sinusoidal waveform 502 outperforms the triangle shape 504 and sawtooth shape 506.

Implementation of dynamic operation of heterogeneous catalysts includes the capability to modify the binding energy of surface intermediates with time. Based on the simulations of FIGS. 2-5, catalyst and system parameters can be selected to achieve average turnover frequencies above the optimum of static conditions and preferably as high as resonance conditions. This implies that a physical catalyst system desirably achieves surface waveform amplitudes of at least 0.3 eV (and preferably above 0.5 eV) and operating frequencies above 10 Hz (and preferably 100-1,000 Hz). These performance targets change with the selected surface chemistry, which will likely have more than two surface intermediates exhibiting linear scaling relationships over a broad range (0.2 < α < 0.8). The complexity of each catalytic chemistry combined with the large number of dynamic catalysis parameters indicates that each system can be guided as described, with microkinetic modeling used for design and optimization.

Device construction for tuning of the surface intermediate adsorbate binding energy can be interpreted via the electronic state of the catalyst material. Surface intermediates such as adsorbed nitrogen, N*, correlate linearly with the d-band edge/center when compared across a broad range of metals. Temporal variation of metal d-bands exists in at least two categories including electronic and physical (and even electro-mechanical) manipulation. Straining of surfaces has been shown to shift the d-band centers of metals, metal alloys and other 2D materials, which alters the binding energy of adsorbates such as carbon monoxide. When combined with dynamic approaches such as sound waves or piezoelectrics capable of 1% strain oscillation exceeding, for example, kilohertz frequencies, this approach can provide the frequencies and amplitudes for resonant dynamic catalytic acceleration. Other appropriate methods can be used to electronically manipulate a catalyst surface including field effect modulation or non-Faradaic electrochemical modification, both of which are suitable to achieve the frequency and amplitude targets desired for surface catalytic resonance. Examples of systems suitable for implementing dynamic catalysis for conversion of gaseous, vaporous, or liquid chemicals on catalytic surfaces are depicted in FIGS. 6-8.

FIG. 6 depicts system 600 for implementing dynamic catalysis for conversion of gaseous, vaporous, or liquid chemicals on a catalyst layer or catalyst clusters on a piezoelectric support exposed to a dynamic electrical signal that transfers variable strain to the catalyst. System 600 includes piezoelectric support 602 having surface 604. Catalyst 606 is coupled to surface 604. Piezoelectric support 602 exhibits strain upon application of electric signal (e.g., voltage) from source 608, such that oscillating strain generated within the piezoelectric material is transferred to catalyst 606. In some cases, catalyst 606 is in the form of a continuous or non-continuous layer disposed on surface 604. In certain cases, catalyst 606 is in the form of a multiplicity of discrete particles or clusters disposed on surface 604. Catalyst 606 may include one or more metal monolayers, metal clusters, single metal atoms, bimetallic layers, bimetallic clusters, metal oxide layers, metal oxide clusters, porous layers (e.g., zeolites or metal-organic frameworks), porous clusters (e.g., zeolites or metal-organic frameworks), or any combination of two or more thereof. Catalyst 606 may be a layer having a thickness selected such that strain applied at the interface between the catalyst and surface 604 is transferred to the exposed surface of the catalyst, thereby leading to variable binding energy of the catalyst. Suitable piezoelectric supports 602 include materials that produce greater than 0.1% strain upon exposure to a dynamic voltage signal and can transfer strain to catalyst 606. Examples of suitable piezoelectric supports 602 include lead zirconate titanate (PZT). Catalyst 606 is typically selected to interact with surface 604 such that strain greater than 0.1% can be transferred between piezoelectric support 602 and the catalyst.

FIG. 7 depicts system 700 for implementing dynamic catalysis for conversion of gaseous, vaporous, or liquid chemicals having a catalyst layer or catalyst clusters on an optional support exposed to a dynamic sound wave signal that transfers variable strain to the catalyst. In some cases, system 700 includes support 702 having surface 704, with catalyst 706 coupled to the surface 704. Catalyst 706 may be in the form of a continuous or non-continuous layer disposed on surface 704 or in the form of a multiplicity of discrete particles or clusters disposed on surface 704. In some cases, system 700 includes catalyst 706 in the absence of a support. That is, support 702 is optional. Catalyst 706 is operably coupled to source 708 configured to produce sound waves. The amplitude and frequency of the sound waves may be selected such that the sound waves propagate through the catalyst 706. The sound waves may be configured (e.g., with a selected frequency, amplitude, or both) to propagate through or form standing waves in the catalyst 706, such that variation in strain with position and time in the catalyst varies the binding energy of adsorbates and reaction surface intermediates with time. Catalyst 706 may include one or more metal monolayers, metal clusters, single metal atoms, bimetallic layers, bimetallic clusters, metal oxide layers, metal oxide clusters, porous layers (e.g., zeolites or metal-organic frameworks), porous clusters (e.g., zeolites or metal-organic frameworks), or any combination of two or more thereof. Suitable supports 702 include materials that can transfer greater than 0.1% strain between surface 704 and catalyst 706. Examples of supports 702 include silica (SiO₂), alumina (Al₂O₃), titania (TiO₂), carbon including graphite/graphene/nanotubes, and barium oxide. Catalyst 706, when in the form of a layer on support 702, may have a thickness selected such that strain applied at the interface between the catalyst and support 702 is transferred to the exposed surface of the catalyst, thereby leading to variable binding energy of the catalyst.

FIG. 8 depicts system 800 for implementing dynamic catalysis for conversion of gaseous, vaporous, or liquid chemicals having a catalyst layer or catalyst clusters on a dielectric material in contact with a gate material exposed to a dynamic gate voltage. Charge induced by the backside gate is periodically accessible and thereby transfers variable strain to the catalyst. System 800 is a multilayer composite including gate layer 802, dielectric layer 804, and catalyst 806. In some cases, catalyst 806 is in the form of a continuous or non-continuous layer disposed on dielectric layer 804. In certain cases, catalyst 806 is in the form of a multiplicity of discrete particles or clusters disposed on dielectric layer 804. Catalyst 806 may include one or more metal monolayers, metal clusters, single metal atoms, bimetallic layers, bimetallic clusters, metal oxide layers, metal oxide clusters, porous layers (e.g., zeolites or metal-organic frameworks), porous clusters (e.g., zeolites or metal-organic frameworks), or any combination of two or more thereof. Catalyst 806 may be in the form of a thin layer, small cluster, or single atom deposited on a metal gate stack. The term "gate" refers to a materials architecture designed to control charge concentration and current in a semiconductor. Source 808 applies oscillatory gate voltage with respect to ground charges of the semiconductor/insulator/gate stack such that electrons or holes accumulate in the semiconductor film depending on the sign of the gate voltage. The charge induced by the backside gate is transferred to catalyst 806 to alter the catalytic properties by varying the binding energy of reactants and products on the catalyst material. In some implementations, the semiconductor material is selected to have catalytic properties.

Chemistries that can be accelerated via dynamic catalysis and oscillatory surface energy include any surface reaction that has the ability to vary surface intermediate binding energy leading to a shift in overall reaction rate limitation between surface reactions and product desorption. Examples of suitable reactions are provided below, along with examples of appropriate catalysts, conditions, and parameters for dynamic operation including surface binding energy [eV], waveform type, and frequency [Hz].

**Ammonia Synthesis.** To enhance the overall catalytic rate, application of methods including piezoelectric strain, sound waves, or field effect modulation can be conducted during ammonia synthesis including the reaction of N₂ and H₂ to make NH₃. The reaction can be conducted on supported Ru metal with an oscillation frequency >10 Hz and an oscillation amplitude of 0.7-1.5 eV according to the Balandin volcano for ammonia synthesis. Square, sinusoidal, and triangle waveforms can be implemented, for example, at 400 °C, 50 bar total inlet pressure, and 3:1 H₂:N₂.

**NOₓ Reduction.** To convert gaseous nitrogen oxides to N₂ using hydrogen, ammonia, or hydrocarbon co-reactants, NOx reduction can be conducted under the application of methods including piezoelectric strain, sound waves, or field effect modulation. NOₓ reduction may occur on supported oxide catalysts including V₂O₅ and TiO₂ with an oscillation frequency >0.001 Hz and oscillation amplitude of 0.75-1.5 eV. Square, sinusoidal, and triangle waveforms can be implemented, for example, at 110 °C, 1 atm total pressure, and a 1:1 NO: reducing agent molar ratio.

**Ethylene Oxidation to Ethylene Oxide.** To oxidize ethylene to ethylene oxide with O₂ with rates accelerated, dynamic catalysis can be conducted using methods including piezoelectric strain, sound waves, or field effect modulation during ethylene oxidation conducted on supported Ag catalysts with an oscillation frequency >10 Hz and an oscillation amplitude of 0.75 to 1.5 eV. Square, sinusoidal, and triangle waveforms can be implemented, for example, at 50 psig and 250 °C.

**Ethane Dehydrogenation to Ethylene.** Ethane vapor can be dehydrogenated to valuable polyethylene monomer and hydrogen (H₂) using methods including piezoelectric strain, sound waves, and field effect modulation. Dehydrogenation can proceed, for example, on oxide catalysts including vanadium and molybdenum oxide, metal catalysts including supported Pt and Pt-Sn, and nitride catalysts including boron nitride (BN). A dynamic oscillation frequency >0.001 Hz can be implemented with an oscillation amplitude of 0.5-1.5 eV. Dynamics with square, sinusoidal, and triangle waveforms can be implemented, for example, at 1-5 atm and 500-600 °C.

**Propane Dehydrogenation to Propylene.** Propane dehydrogenation to valuable polypropylene monomer and hydrogen (H₂) can be conducted using methods including piezoelectric strain, sound waves, and/or field effect modulation. Dehydrogenation may be facilitated by supported Pt catalysts and/or Pt alloys with Sn or Au. Dynamic catalysis can be conducted, for example, with an oscillation frequency >0.005 Hz and an oscillation amplitude between 0.5-1.5 eV. Dynamics with square, sinusoidal, and triangle waveforms can be employed, for example, at 1 atm feed pressure between 550-620 °C.

**Butane Dehydrogenation to Butenes and/or Butadiene.** Butane vapor can be dehydrogenated to butenes and further to highly desired rubber component butadiene with dynamic catalysis, using methods including piezoelectric strain, sound waves, and field effect modulation. Dehydrogenation can proceed over pure and mixed vanadium oxide catalysts with, for example, dynamic oscillation frequencies >0.007 Hz and oscillation amplitudes between 0.7-1.5 eV. Square, sinusoidal, and triangle waveforms can be employed, for example, at 1-2 atm feed pressure between 500-540 °C.

**Methane Partial Oxidation to Methanol.** Widely available methane (natural gas) can be converted to methanol (a desirable platform molecule) using oxygen, peroxides, or ozone with methods including piezoelectric strain, sound waves, and field effect modulation. Supported Ni and other transition metal catalysts can be used, for example, with an oscillation frequency >400 Hz and an oscillation amplitude between 0.6-1.5 eV. Square, sinusoidal, and triangle waveforms can be implemented, for example, at 1-300 atm feed pressure between 450-900 °C.

**Propylene Oxidation to Propylene Oxide.** Propylene vapor can be oxidized to propylene oxide (a valuable precursor to propylene glycol and polypropylene glycol) using oxygen, peroxides, or ozone with methods including piezoelectric strain, sound waves, and field effect modulation. Noble metal catalysts such as supported Pt and oxide catalysts including, for example, supported TiOₓ, NbOₓ, and TaOₓ can be employed dynamically with an oscillation frequency >0.1 Hz and amplitude between 1.3-3.0 eV. Sinusoidal, sawtooth, and triangle waveforms can be implemented, for example, under reaction conditions including 5-25 bar inlet pressure and 150-300 °C.

Other examples of implementation of dynamic catalysis are listed in Table 1. All dynamic examples can be conducted with square, sinusoidal, sawtooth, or triangular waveforms in catalyst surface binding energy.

**Table 1. Dynamic Catalysis Examples**

| **Reaction** | **Conditions** | **Catalyst** | **Frequency** | **Amplitude** |
|---|---|---|---|---|
| CO + ½ O₂ ←→ CO₂ | 100 °C, 2.0 atm | Pt | 150 Hz | 0.6 eV |
| CO₂ + 3H₂ ←→ CH₃OH + H₂O | 200 °C, 50 atm | Cu | 1800 Hz | 0.4 eV |
| VOC + O₂ ←→ CO₂ + H₂O | 300 °C, 1 atm | Ni | 450 Hz | 0.3 eV |
| CH₄ + H₂O ←→ CO + 3H₂ | 500 °C, 1.5 atm | Ni | 10,000 Hz | 0.5 eV |
| CH₄ + NH₃ + 1.5 O₂ ←→ HCN + 3H₂O | 600 °C, 2.0 atm | Pt | 1,000 Hz | 0.4 eV |
| H₂ + CO ←→ CₓH_{y} + H₂O | 250 °C, 100 atm | Co | 6,500 Hz | 0.7 eV |
| CO + 2H₂ ←→ CH₃OH | 260 °C, 50 atm | Cu | 7,500 Hz | 0.6 eV |
| CH₃CH₂OH ←→ CH₂CH₂ + H₂O | 400 °C, 1.0 atm | Zeolite | 5,000 Hz | 0.4 eV |
| CO + H₂O ←→ CO₂ + H₂ | 250 °C, 2.0 atm | CuO | 4,000 Hz | 0.5 eV |

### IMPLEMENTATIONS

Various implementations that are not claimed as such are described below.

An experimental method, including a reactor and heterogeneous catalyst, the method comprising perturbation of catalyst properties as a function of time on stream leading to variation in binding energy of one or more of the surface species. The heterogeneous catalyst may be provided with a specified oscillation frequency and amplitude.

An experimental method comprising oscillation of heterogeneous catalyst properties with specification including one or more of: oscillation of catalyst binding energy by 0.6-1.5 eV or 0.1 to 4.0 eV, oscillation at a dynamic speed of 0.0001-10¹¹ Hz or 100 - 10,000,000 Hz, a selected waveform (e.g., square wave, sinusoidal, triangular, sawtooth); oscillation between more than two states (e.g., 3, 4, 5, or more states). For systems with more than one state, the amplitude may vary for each state. The waveform may include a combination of frequencies (e.g., 1,000 Hz and 10,000 Hz overlapping).

An experimental method, performed on an apparatus including a reactor and piezoelectric material, the method comprising dynamic application of strain or voltage to the piezoelectric material, with a catalytic reaction performed on the piezoelectric material or an active metal or oxide phase supported on the piezoelectric material.

An experimental method, performed on an apparatus including a reactor and lead zirconate titanate (PZT) piezoelectric, the method comprising application of ± 0.1 to 0.4 % strain as a function of time on stream or up to 3% strain. The catalysis may occur over Au, Pt, Pd, Cu, Fe, Ni, Ag, Ru, Co, Mn, Ir, Rh, Mo, or a combination thereof supported on the PZT piezoelectric An electric field applied across the piezoelectric can be between 0.001 to 10 V/Å.

An experimental method, performed on an apparatus including a reactor and an acoustic device, the method comprising one or more of dynamic application of sound waves or pressure from the acoustic device to the catalyst, the support material, or both; catalytic reaction performed on catalyst material being subjected to sound waves; and active metal or oxide phase or both supported on the support being subjected to sound waves. Sound wave frequencies can be applied in a various forms and frequencies (e.g., 100 Hz to 10,000 Hz or 0.1 Hz to 10,000,000 Hz)

An experimental method, performed on an apparatus consisting of a reactor and an electronically back-gated material setup includes dynamic application of back gate voltage to the catalytic stack including a dielectric and back-gate material optionally with a catalyst in contact with the dielectric. The dielectric may be a paraelectric or ferroelectric material that spontaneously polarizes in the presence of an electric field. Examples of suitable ferroelectric materials include barium titanate (BaTiO₃), potassium niobate (KnbO₃), lead titanate (PbTiO₃), lithium tantalate, strontium titanate (SrTiO₃), and doped materials such as BaZrO₃/BaTiO₃. Examples of suitable paraelectric materials include silicon dioxide (SiO₂), aluminum oxide (Al₂O₃), and tantalum pentoxide (Ta₂O₅). The catalysts may include a metal layer, single metal atoms, or metal cluster of 2 or more atoms. In some cases, the catalyst layer/cluster may be <10 nm or < 100 nm in thickness. The catalyst may include a catalyst layer, cluster, or single atoms of metals, metal monolayers, bimetallic layers, metal oxide layers, oxide clusters, or porous layers such as zeolites or porous clusters. The catalytic reaction occurs on the catalyst material. The applied backgate voltage is a dynamic waveform (e.g., square, sinusoidal, triangle, sawtooth), with frequencies in a range of 0.1 Hz to 10,000,000 Hz or 100 Hz to 10,000 Hz.

Although this disclosure contains many specific embodiment details, these should not be construed as limitations on the scope of the subject matter or on the scope of what may be claimed, but rather as descriptions of features that may be specific to particular embodiments. Certain features that are described in this disclosure in the context of separate embodiments can also be implemented, in combination, in a single embodiment. Conversely, various features that are described in the context of a single embodiment can also be implemented in multiple embodiments, separately, or in any suitable sub-combination. Moreover, although previously described features may be described as acting in certain combinations and even initially claimed as such, one or more features from a claimed combination can, in some cases, be excised from the combination, and the claimed combination may be directed to a sub-combination or variation of a sub-combination.

Particular embodiments of the subject matter have been described. Other embodiments, alterations, and permutations of the described embodiments are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations may be considered optional), to achieve desirable results.

Accordingly, the previously described example embodiments do not define or constrain this disclosure. Other changes, substitutions, and alterations are also possible without departing from the scope of this disclosure.

## Claims

1. A system configured to catalyze the conversion of a first chemical species to a second chemical species, the system comprising:
a back gate device comprising:
a dielectric material; and
a back gate material; and
a catalyst,
wherein the back gate device is configured to apply a back gate voltage to the catalyst,
wherein the back gate voltage is a waveform.

2. The system of claim 1, further comprising a dielectric support in direct contact with the catalyst.

3. The system of claim 1, wherein the catalyst is in the form of a metal layer, a single metal atom, or a metal cluster comprising two or more atoms.

4. The system of claim 1, wherein the catalyst has a thickness of less than 10 nm or less than 100 nm.

5. The system of claim 1, wherein the waveform is a square wave, a sinusoidal wave, a sawtooth wave, a triangular wave, or a combination thereof.

6. The system of claim 1, wherein a frequency of the waveform is in a range of 0.1 Hz to 10⁷ Hz.

7. The system of claim 6, wherein a frequency of the waveform is in a range of 100 Hz to 10,000 Hz.

8. The system of claim 1, wherein the dielectric material spontaneously polarizes in the presence of an electric field.

9. The system of claim 8, wherein the dielectric material comprises a ferroelectric material.

10. The system of claim 9, wherein the ferroelectric material comprises one or more of barium titanate (BaTiO₃), potassium niobate (KnbO₃), lead titanate (PbTiO₃), lithium tantalate, and strontium titanate (SrTiO₃).

11. The system of claim 9, wherein the ferroelectric material comprises doped materials such as BaZrO₃/BaTiO₃.

12. The system of claim 8, wherein the dielectric material comprises a paraelectric material.

13. The system of claim 12, wherein the paraelectric material comprises one or more of silicon dioxide (SiO₂), aluminum oxide (Al₂O₃), and tantalum pentoxide (Ta₂O₅).

14. A method for catalyzing the conversion of a first chemical species to a second chemical species, the method comprising:
applying a back gate voltage to a catalytic stack comprising a dielectric material, a back gate material, and a catalyst,
wherein the back gate voltage is a waveform.

## Patentansprüche

1. Ein System, das dazu konfiguriert ist, die Umwandlung einer ersten chemischen Spezies in eine zweite chemische Spezies zu katalysieren, das System umfassend:
eine Back-Gate-Vorrichtung, umfassend:
ein dielektrisches Material; und
ein Back-Gate-Material; und
einen Katalysator,
wobei die Back-Gate-Vorrichtung dazu konfiguriert ist, eine Back-Gate-Spannung an den Katalysator anzulegen,
wobei die Back-Gate-Spannung eine Wellenform ist.

2. System nach Anspruch 1, das ferner einen dielektrischen Träger umfasst, der in direktem Kontakt mit dem Katalysator steht.

3. System nach Anspruch 1, wobei der Katalysator in Form einer Metallschicht, eines einzelnen Metallatoms oder eines Metallclusters aus zwei oder mehr Atomen vorliegt.

4. System nach Anspruch 1, wobei der Katalysator eine Dicke von weniger als 10 nm oder weniger als 100 nm aufweist.

5. System nach Anspruch 1, wobei die Wellenform eine Rechteckwelle, eine Sinuswelle, eine Sägezahnwelle, eine Dreieckwelle oder eine Kombination davon ist.

6. System nach Anspruch 1, wobei die Frequenz der Wellenform in einem Bereich von 0,1 Hz bis 10⁷ Hz liegt.

7. System nach Anspruch 6, wobei die Frequenz der Wellenform in einem Bereich von 100 Hz bis 10.000 Hz liegt.

8. System nach Anspruch 1, wobei sich das dielektrische Material in Gegenwart eines elektrischen Feldes spontan polarisiert.

9. System nach Anspruch 8, wobei das dielektrische Material ein ferroelektrisches Material umfasst.

10. System nach Anspruch 9, wobei das ferroelektrische Material eines oder mehrere der folgenden Materialien umfasst: Bariumtitanat (BaTiO₃), Kaliumniobat (KNbO₃), Bleititanat (PbTiO₃), Lithiumtantalat und Strontiumtitanat (SrTiO₃).

11. System nach Anspruch 9, wobei das ferroelektrische Material dotierte Materialien wie BaZrO₃/BaTiO₃ umfasst.

12. System nach Anspruch 8, wobei das dielektrische Material ein paraelektrisches Material umfasst.

13. System nach Anspruch 12, wobei das paraelektrische Material eines oder mehrere der folgenden Materialien umfasst: Siliziumdioxid (SiO₂), Aluminiumoxid (Al₂O₃) und Tantalpentoxid (Ta₂O₅).

14. Verfahren zum Katalysieren der Umwandlung einer ersten chemischen Spezies in eine zweite chemische Spezies, das Verfahren umfassend:
Anlegen einer Back-Gate-Spannung an einen katalytischen Stapel, der ein dielektrisches Material, ein Back-Gate-Material und einen Katalysator umfasst,
wobei die Back-Gate-Spannung eine Wellenform ist.

## Revendications

1. Système configuré pour catalyser la conversion d'une première espèce chimique en une seconde espèce chimique, le système comprenant :
un dispositif à grille arrière comprenant :
un matériau diélectrique ; et
un matériau de grille arrière ; et
un catalyseur,
dans lequel le dispositif à grille arrière est configuré pour appliquer une tension de grille arrière au catalyseur,
dans lequel la tension de grille arrière est une forme d'onde.

2. Système selon la revendication 1, comprenant en outre un support diélectrique en contact direct avec le catalyseur.

3. Système selon la revendication 1, dans lequel le catalyseur est sous la forme d'une couche métallique, d'un seul atome métallique ou d'un cluster métallique comprenant deux ou plus de deux atomes.

4. Système selon la revendication 1, dans lequel le catalyseur présente une épaisseur inférieure à 10 nm ou inférieure à 100 nm.

5. Système selon la revendication 1, dans lequel la forme d'onde est une onde carrée, une onde sinusoïdale, une onde en dents de scie, une onde triangulaire ou une de leurs combinaisons.

6. Système selon la revendication 1, dans lequel une fréquence de la forme d'onde est comprise dans une plage de 0,1 Hz à 10⁷ Hz.

7. Système selon la revendication 6, dans lequel une fréquence de la forme d'onde est comprise dans une plage de 100 Hz à 10 000 Hz.

8. Système selon la revendication 1, dans lequel le matériau diélectrique se polarise spontanément en présence d'un champ électrique.

9. Système selon la revendication 8, dans lequel le matériau diélectrique comprend un matériau ferroélectrique.

10. Système selon la revendication 9, dans lequel le matériau ferroélectrique comprend un ou plusieurs parmi le titanate de baryum (BaTiO₃), le niobate de potassium (KNbO₃), le titanate de plomb (PbTiO₃), le tantalate de lithium et le titanate de strontium (SrTiO₃).

11. Système selon la revendication 9, dans lequel le matériau ferroélectrique comprend des matériaux dopés tels que BaZrO₃/BaTiO₃.

12. Système selon la revendication 8, dans lequel le matériau diélectrique comprend un matériau paraélectrique.

13. Système selon la revendication 12, dans lequel le matériau paraélectrique comprend un ou plusieurs parmi le dioxyde de silicium (SiO₂), l'oxyde d'aluminium (Al₂O₃) et l'oxyde de tantale(V) (Ta₂O₅).

14. Procédé de catalyse de la conversion d'une première espèce chimique en une seconde espèce chimique, le procédé comprenant :
l'application d'une tension de grille arrière à un empilement catalytique comprenant un matériau diélectrique, un matériau de grille arrière et un catalyseur,
dans lequel la tension de grille arrière est une forme d'onde.
